# EUROPEAN PATENT SPECIFICATION

(11) **EP 1 686 779 B1**
(45) Date of publication and mention of the grant of the patent: **24.06.2009**
(21) Application number: 06250450.1
(22) Date of filing: 26.01.2006
(51) Int. Cl.: H04M 1/725, H04B 17/00

(54) **Cordless telephone set**
Schnurlos-Telefone-Gerätesatz
Groupe téléphonique sans fil

(30) Priority: 26.01.2005 JP 2005018695
(43) Date of publication of application: 02.08.2006
(73) Proprietor: Brother Kogyo Kabushiki Kaisha, Nagoya-shi, Aichi-ken 467-8561 (JP)
(72) Inventor: Tsutomu, Ukon c/o Technology Planning & IP Dept, Nagoya-shi Aichi-ken 467-8562 (JP)
(74) Representative: Smith, Samuel Leonard

(56) References cited:
- EP-A- 1 111 822
- WO-A-20/04107607
- US-A1- 2002 055 372
- US-A1- 2002 193 077

## Description

### CROSS REFERENCE TO RELATED APPLICATION

This application claims priority from Japanese Patent Application No. 2005-018695, filed on January 26, 2005,

### TECHNICAL FIELD

Aspects of the present invention relate to a cordless telephone set including a main device connected to a telephone line network and a mobile device connected via a radio circuit to the main device, and the mobile device for use with the telephone set.

### BACKGROUND

Conventionally, a cordless telephone set including a main device connected to the telephone line network, and a mobile device connected via the radio circuit to the main device is well known.

This cordless telephone set is well known in which when the user is talking employing the mobile device (i.e., the mobile device is connected via the main device to the telephone line network), the mobile device measures the signal strength of radio signal transmitted from the main device, and displays the measured result on the display of the mobile device (e.g., refer to JP-B-3-32254).

With this telephone set, the user can know the communication status between the main device and the mobile device by seeing the display during the telephone conversation.

### SUMMARY

By the way, the signal strength measured in the mobile device is varied depending on the position at which the user has the mobile device.

Therefore, when the user moves the mobile device from the ear to the hand to confirm the signal strength on the display during the telephone conversation, the signal strength displayed on the display is varied, so that the user cannot know the communication status between the main device and the mobile device during the telephone conversation.

This invention provides a cordless telephone set and its mobile device in which the user can be informed of the communication status close to the talking condition.

According to an aspect of the present invention, there is provided an additional device for a cordless telephone set, including: a communication unit that makes radio communication with a main device; a communication control unit that decides a radio channel for communication available to transmit and receive a signal to or from the main device, when a calling command is inputted or a call signal transmitted by radio from the main device is received by the communication unit, and then transmits or receives the signal by enabling the communication unit to make the radio communication with the main device, employing the decided radio channel for communication; a display unit that displays information; a signal strength detection unit that periodically detects a signal strength of a radio signal received from the main device by the communication unit, when the communication unit makes the radio communication with the main device under a control of the communication control unit; a signal strength estimation unit that estimates a current signal strength based on a plurality of signal strengths acquired before, by sequentially acquiring the signal strength detected by the signal strength detection unit; and a display control unit that displays a communication status with the main device on the display unit, based on the signal strength estimated by the signal strength estimation unit.

With the additional device for the cordless telephone set, the signal strength detection unit periodically detects the signal strength of radio signal received from the main device by the communication unit, when the communication unit makes the radio communication via the radio channel for communication with the main device under the control of the communication control unit, and the signal strength estimation unit estimates the current signal strength of the radio signal from the main device, based on plural signal strengths acquired in the past, by sequentially acquiring the signal strength detected by the signal strength detection unit. The display control unit displays a communication status with the main device on the display unit, based on the signal strength estimated by the signal strength estimation unit.

With this additional device for the cordless telephone set, when the communication unit makes the radio communication via the radio channel for communication with the main device under the control of the communication control unit (i.e., when the user is talking employing the additional device), the communication status is not rapidly changed, even when the user moves the additional device from the ear to confirm the communication status displayed on the display unit. Thereby, the user can know the communication status similar to that of the talking condition.

### BRIEF DESCRIPTION OF THE DRAWINGS

Illustrative aspects of the invention may be more readily described with reference to the accompanying drawings:
Fig. 1 is a perspective view of a cordless telephone set according to an aspect of the present invention;
Fig. 2 is a perspective view of a mobile device and a charging stand for the cordless telephone set;
Fig. 3 is a block diagram showing the electrical configuration of the cordless telephone set;
Fig. 4 is an explanatory view for explaining a graphic generation table;
Fig. 5 is a sequence diagram showing the operation performed between the main device and the mobile device when the user makes a call from the mobile device according to a first aspect;
Fig. 6 is a sequence diagram showing the operation performed between the main device and the mobile device when there is a call incoming from the outside in the cordless telephone set according to the first aspect;
Fig. 7 is a flowchart showing a process performed by a control part, when there is a incoming call, or a telephone call start operation is made in the mobile device according to the first aspect;
Fig. 8 is an explanatory view for explaining the graphics displayed on a display panel when the user is talking on the mobile device;
Fig. 9 is an explanatory view for explaining a graphic generation table after change;
Fig. 10 is a flowchart showing a process performed by control part, when there is a call incoming, or the telephone call start operation is made in the mobile device according to a second aspect;
Fig. 11 is a flowchart showing a main device RSSI value transmission process performed in a radio communication control part of the main device according to the second aspect; and
Fig. 12 is a sequence diagram showing the operation performed between the main device and the mobile device when the user makes a call from the mobile device according to the second aspect.

### DETAILED DESCRIPTION

Aspects of the present invention will be described below with reference to the drawings.

### [First aspect]

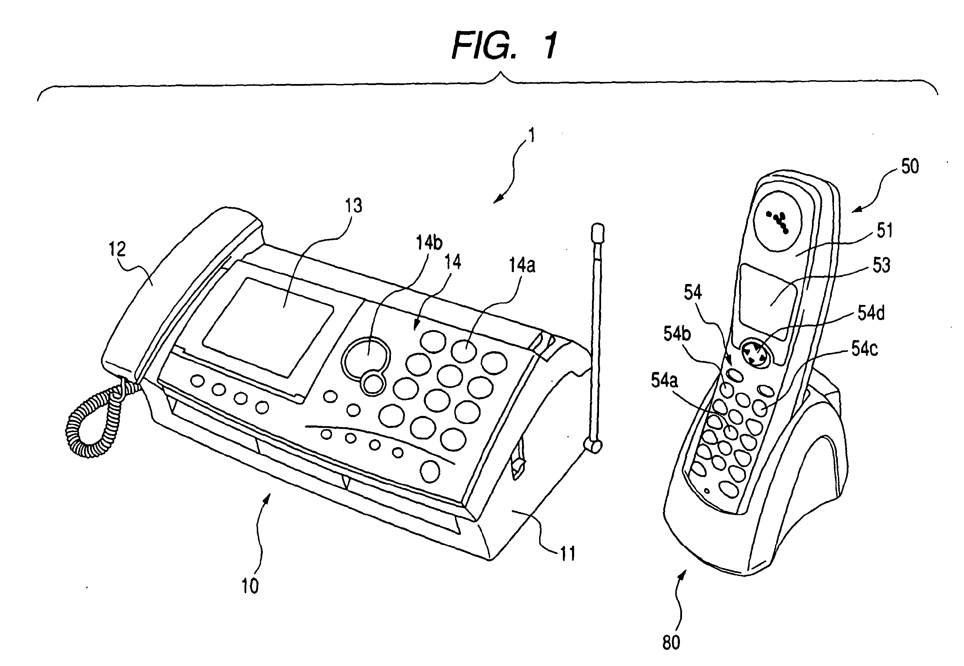

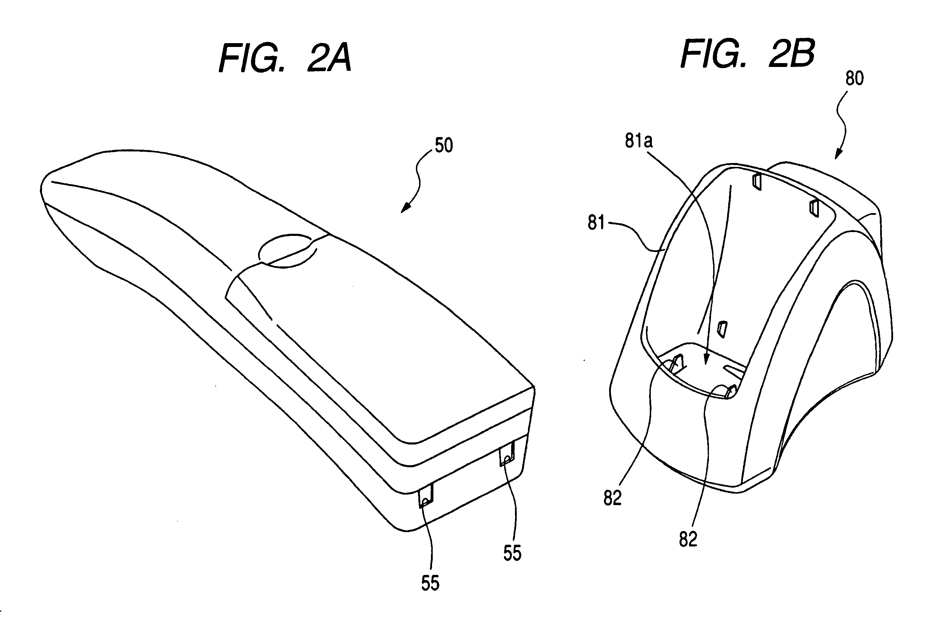

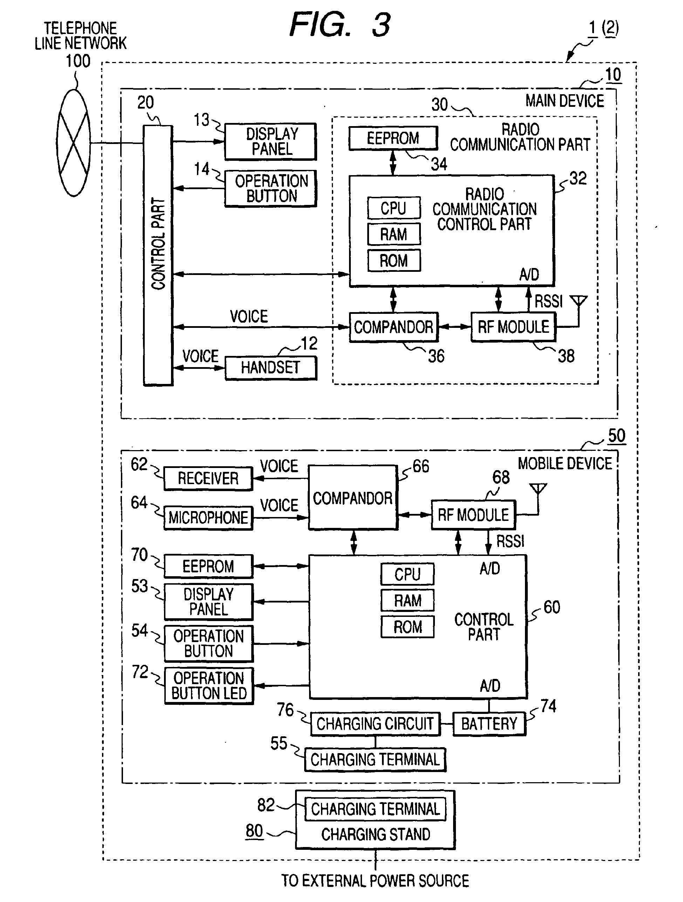

Fig. 1 is a perspective view of a cordless telephone set 1 according to an aspect of the invention. Fig. 2A is a perspective view showing the rear face of a mobile device 50 and Fig. 2B is a perspective view of a charging stand 80. Fig. 3 is a block diagram showing the electrical configuration of the cordless telephone set 1.

The cordless telephone set 1 has a function (telephone call function) of talking over the telephone via a telephone linenetwork 100 (see Fig. 3) and a function (facsimile function) of transmitting or receiving the image data via the telephone line network 100, and, as shown in Fig. 1, includes a main device 10 connected to the telephone line network 100, a mobile device 50 connected via a radio circuit to the main device 10, and a charging stand 80, connected to an external power source, not shown, for charging the mobile device 50 at a predetermined voltage, the mobile device 50 being laid detachably. In the cordless telephone set 1 of this aspect, the components regarding the facsimile function are not directly related with the invention, and not described here.

The main device 10 has a handset 12 that is a transmitter-receiver on the side portion of a main device main case 11, in which the handset is detached from a main body of the main device 10, when used. Moreover, a display panel 13 for displaying the information relevant to various kinds of functions and various kinds of operation buttons 14, including a dial button 14a for inputting the telephone number of the other party and a selection button 14b that is operated for selecting from the menu screen displayed on the display panel 13 are provided on an upper face of the main device main case 11. The display panel 13 is a liquid crystal display (LCD) with a back light for illuminating the display screen from the back side.

The mobile device 50 includes a display panel 53 for displaying the information relevant to various kinds of functions, various kinds of operation buttons 54 including a dial button 54a for inputting the telephone number of the other party, an outside line call button 54b that is operated in starting the outside line call, an off button 54c that is operated in terminating the talking, and a selection button 54d that is operated for selecting from the menu screen displayed on the display panel 53, and a charging terminal 55 (see Fig. 2A) for charging a battery 74 (see Fig. 3) for supplying electric power to the whole of the mobile device 50 from a charging stand 80 on the surface of a mobile device main case 51 having a shape of handset.

The display panel 53 is a liquid crystal display (LCD) with a back light for illuminating the display screen from the back side.

The charging stand 80 includes a charging stand main body 81 formed with a laying concave portion 81a on which the mobile device 50 is detachably laid, and a charging terminal 82, provided within the laying concave portion 81a, for making contact with the charging terminal 55 when the mobile device 50 is laid on the laying concave portion 81a, as shown in Fig. 2B.

Referring to Fig. 3, an electrical configuration of the cordless telephone set 1 will be described below.

The main device 10 includes a control part 20 for controlling the overall operation of the main device 10, a handset 12, a display panel 13, an operation button 14, and a radio communication part 30 for transmitting or receiving by radio a voice signal (corresponding to a talking signal) or a data signal to or from the mobile device 50.

An output signal from the operation button 14, an output signal (voice or data signal) from the radio communication part 30 and a voice signal from outside of the cordless telephone set 1 are inputted into the control part 20.

Also, the control part 20 establishes a transmission path between transmission destination and transmission source of the voice signal inputted or outputted from outside of the cordless telephone set 1. More specifically, when the handset 12 is removed from the main body of the main device 10, the transmission path is switched to the handset 12, or when the telephone call start operation for starting the telephone call is performed by the mobile device 50, the transmission path is switched to the radio communication part 30.

Moreover, the control part 20 outputs a data signal or a voice signal for radio communication with the mobile device 50 to the radio communication part 30, and outputs a voice signal from the handset 12 and the radio communication part 30 to the outside of the cordless telephone set 1.

The radio communication part 30 includes a radio communication control part 32 composed of a CPU, a RAM, a ROM and an A/D converter, an EEPROM 34, a compander36, and an RF module 38 for making the radio communication with the mobile device 50.

The compander36 acquires a radio signal sent from the mobile device 50 via the RF module 38, and segregates its signal into a voice signal and a data signal, the voice signal being sent to the control part 20, and the data signal being sent to the radio communication control part 32. Also, the compander36 sends the voice signal from the control part 20 or the data signal from the radio communication control part 32 to the RF module 38.

The RF module 38 is configured to be communicable with the radio communication control part 32, selects a radio channel for use in the radio communication from among a plurality of radio channels having different frequencies in accordance with a command from the radio communication control part 32, and sends an output signal from the compander36 to the mobile device 50, as well as receives the radio signal sent from the mobile device 50, employing the selected radio channel.

In this aspect, the radio channels that the RF module 38 employs for radio communication are 89 radio channels with a frequency interval between each radio channel being 12.5kHz in a band of 380MHz. The radio channels that the mobile device 50 (more particularly the RF module 68) employs for radio communication are 89 radio channels with a frequency interval between each radio channel being 12.5kHz in a band of 280MHz. Among them, the 46 channel and the 89 channel are employed to transmit or receive the data signal alone, and any one of the remaining 1 channel to 45 channel and 47 channel to 88 channel is employed to transmit or receive the voice signal. In the following explanation, the 46 and 89 channels are called a control channel and the 1 to 45 and 47 to 88 channels are called a communication channel to distinguish the radio channels used between the main device 10 and the mobile device 50.

Also, the RF module 38 detects the signal strength of a signal received by radio from the outside, and outputs its detection result to the A/D converter of the radio communication control part 32. In this aspect, the A/D converter of the radio communication control part 32 converts the detection result inputted from the RF module 38 into a digital value of 8 bits.

The data signal outputted from the control part 20 or the compander36 is inputted into the radio communication control part 32. The radio communication control part 32 outputs the data signal from the control part 20 to the compander36.

Also, the radio communication control part 32 selects the available radio channel, based on the signal strength detected by the RF module 38, and transmits its result to the RF module 38, when the main device 10 starts the communication with the mobile device 50.

Thereby, the main device 10 starts the radio communication with the mobile device 50, employing the radio channel selected by the radio communication control part 32.

The mobile device 50 includes a control part 60 for controlling the overall operation of the mobile device 50, a display panel 53, an operation button 54, a receiver 62, a microphone 64, a compander66, an RF module 68 for transmitting or receiving the voice signal or data signal in radio communication with the main device 10 (more particularly the RF module 38), an EEPROM 70, an operation button LED 72 for illuminating the operation button 54 from behind, a battery 74 for supplying electric power to the whole of the mobile device 50, a charging terminal 55 for electrically connecting to the charging terminal 82, and a charging circuit 76 for charging the battery 74 at a power voltage supplied from the charging stand 80 via the charging terminal 55.

The compander66 acquires a radio signal sent from the main device 10 via the RF module 68, and segments its signal into a voice signal and a data signal, the voice signal being sent to the receiver 62, and the data signal being sent to the control part 60. Also, the compander66 sends the voice signal from the microphone 64 or the data signal from the control part 60 to the RF module 68.

The RF module 68 is configured to be communicable with the control part 60, selects a radio channel for use in the radio communication from among 89 radio channels in accordance with a command from the control part 60, and sends an output signal from the compander66 to the main device 10, as well as receives the radio signal sent from the main device 10, employing the selected radio channel.

Also, the RF module 68 detects the signal strength of a signal received by radio from the outside, and outputs its detection result to the A/D converter contained in the control part 60. In this aspect, the A/D converter of the control part 60 converts the detection result inputted from the RF module 68 into a digital value of 8 bits (hereinafter referred to as an RSSI value).

The control part 60 includes a CPU, a RAM, a ROM and an A/D converter. An output signal from the operation button 54 or a data signal from the compander66 is inputted into the control part 60.

Also, the control part 60 outputs the data signal for radio communication with the main device 10 to the compander66.

Also, the control part 60 is configured to be communicable with the RF module 68, and selects the available radio channel, based on the signal strength detected by the RF module 68, as well as transmits its result to the RF module 68, when the mobile device 50 starts the communication with the main device 10.

Thereby, the mobile device 50 starts the radio communication with the main device 10, employing the radio channel selected by the control part 60.

Moreover, the control part 60 causes the RF module 68 to periodically acquire the signal strength of radio signal transmitted from the main device 10 via the communication channel, and calculates the average value of five signal strengths (i.e., RSSI value) acquired in the past, when the mobile device 50 is making the radio communication with the main device 10 via the communication channel.

The control part 60 compares the calculated average value with a plurality of thresholds stored in the ROM, digitizes the average value at stages, generates a typical graphic, based on the digitized result, and displays the generated graphic as a communication status with the main device 10 on the display panel 53.

More specifically, a graphic generation table is stored in the ROM of the control part 60.

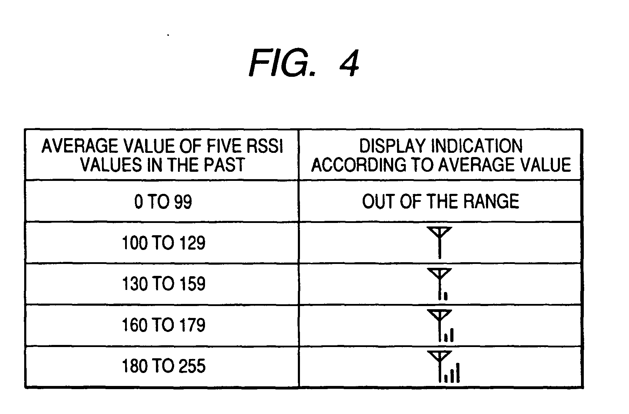

In the graphic generation table, the values of 0 to 255 are divided into five stages in terms of the plurality of thresholds, and the figure generated by the control part 60 is associated with each stage, as shown in Fig. 4.

That is, the graphic generation table shows the graphics corresponding to the communication status that is better as the threshold is higher (downward in Fig. 4), such that the lowest level (0 to 99) corresponds to a graphic indicating the state where the mobile device 50 is incommunicable with the main device 10, the secondly lowest level (100 to 129) corresponds to a graphic indicating the state where the communication status of the main device 10 is worst, and so on. In this aspect, the state where the communication status is worst is the state where the main device 10 is communicable with the mobile device 50, but the communication status is worst.

The control part 60 calculates the average value of five RSSI values acquired in the past from the RF module 68, and extracts the graphic corresponding to the calculated average value by referring to the graphic generation table. The control part 60 extracts the graphic from the graphic generation table, and displays the graphic on the display panel 53.

Next, the charging stand 80 has the charging terminal 82 that is supplied with electric power from a required external power source to generate a predetermined power voltage, and supply electric power to the mobile device 50.

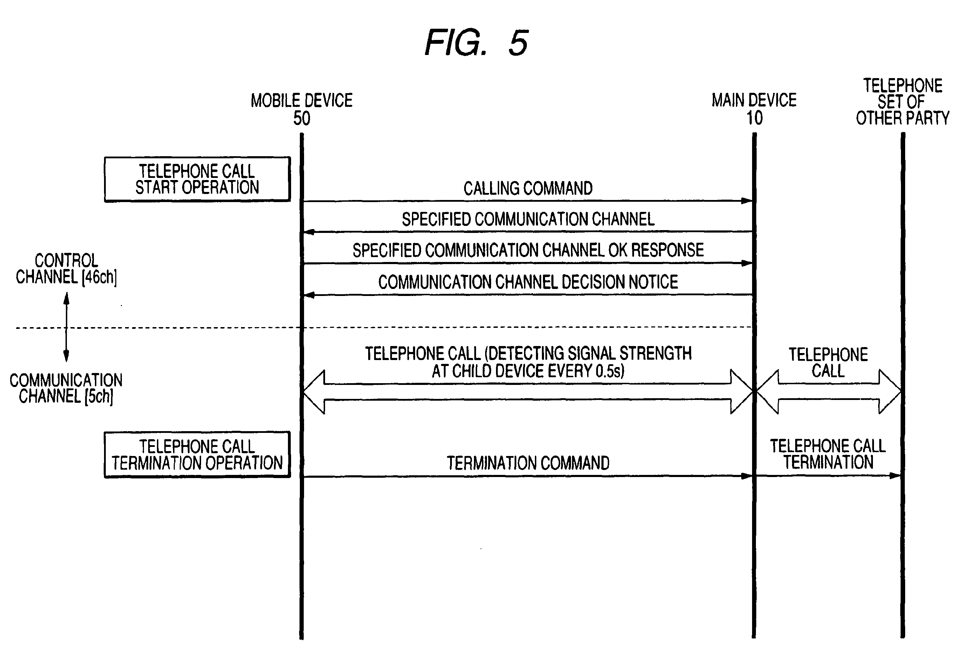

Referring to Fig. 5, the operation performed between the main device 10 and the mobile device 50 when the user makes a call from the mobile device 50 will be described below.

When the user depresses an outside line call button 54b at the mobile device 50 in a no talking state (standby state) to make the telephone call start operation, the mobile device 50 sends a calling command to the main device 10, employing a predetermined control channel (e.g., 46 channel).

The main device 10 receiving the calling command selects one communication channel (e.g., 5 channel) for radio communication with the mobile device 50, and sends a specified communication channel' command representing the selected communication channel to the mobile device 50, employing the control channel (46 channel).

The mobile device 50 receiving the specified communication channel command acquires the signal strength of radio signal in a frequency band of the 5 channel at the RF module 68, and determines whether or not the 5 channel is available, based on the acquired signal strength. In Fig. 5, for the explanation, it is supposed that the 5 channel is determined to be available.

As a result of determination, since the 5 channel is the available communication channel, the mobile device 50 sends a specified communication channel OK response indicating that the 5 channel is available channel to the main device 10, employing the 46 channel.

The main device 10 receiving the specified communication channel OK response sends a communication channel decision notice indicating that the radio communication is made on the 5 channel from then to the mobile device 50, employing the 46 channel.

The mobile device 50 receiving the communication channel decision notice is enabled for talking. The communicable as used herein means that the communication between the main device 10 and the mobile device 50 is established on the specified communication channel in a state where the mobile device 50 is connected to the telephone line network 100 via the main device 10.

Thereafter, the user performs a dial operation at the mobile device 50, and the main device 10 sends out a dial signal to the telephone line network 100 to respond to the telephone set of the other side, whereby the outside line telephone call is enabled to the telephone set of the other party.

Herein, the mobile device 50, which becomes in a talking enabled state, acquires the signal strength of radio signal sent via the communication channel (5 channel in this example) from the main device 10 periodically (every 0.5s in this aspect), and displays a graphic extracted from the graphic generation table as the communication status with the main device 10 on the display panel 53, based on the average value of five signal strengths acquired in the past.

Thereafter,when the user of the mobile device 50 depresses the off button 54c of the mobile device 50 to make the telephone call termination operation, the mobile device 50 sends a telephone call termination command to the main device 10, and stops the display of the graphic.

The main device 10 receiving the telephone call termination command terminates the outside line telephone call to the telephone set of the other party.

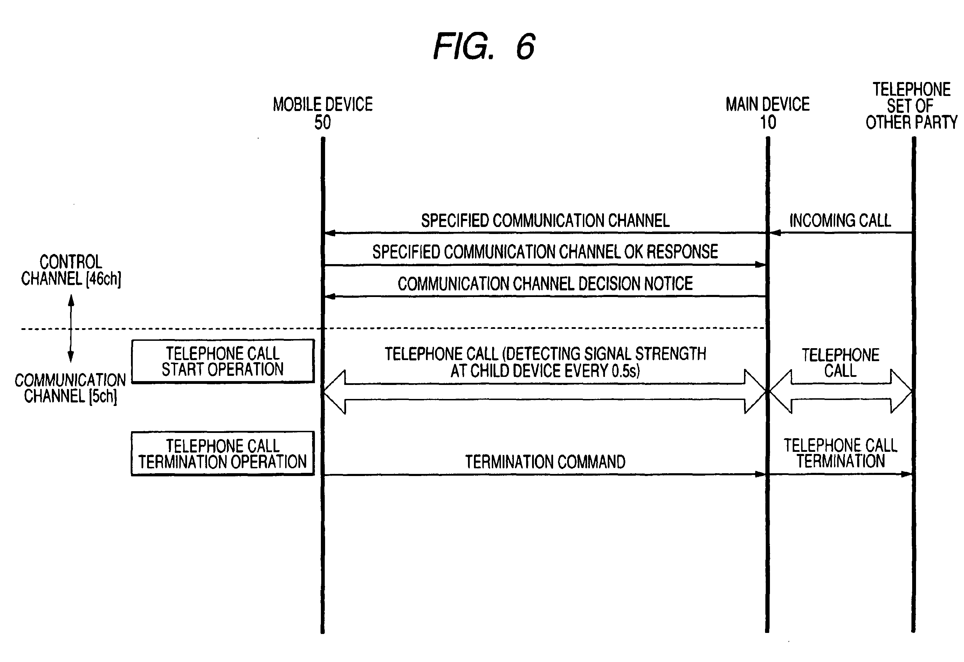

Referring to Fig. 6, the operation performed between the main device 10 and the mobile device 50 when there is a call incoming from the telephone set of the other party at the cordless phone 1 will be described below.

First of all, when a call incoming from the telephone set of the other party is detected at the main device 10, the main device 10 selects one communication channel (e.g., 5 channel) for radio communication with the mobile device 50, and sends a specified communication channel command indicating the selected communication channel to the mobile device 50, employing a predetermined control channel (e.g., 46 channel).

The mobile device 50 receiving the specified communication channel command determines whether or not the 5 channel is available, and if the 5 channel is determined to be available, sends a specified communication channel OK response to the main device 10, employing the 46 channel, as described above.

The main device 10 receiving the specified communication channel OK response sends a communication channel decision notice indicating that the radio communication is made on the 5 channel from then to the mobile device 50, employing the 46 channel.

When the mobile device 50 receives the communication channel decision notice, the mobile device 50 is enabled for talking.

More specifically, the mobile device 50 receiving the communication channel decision notice informs the user of an incoming call by ringing. After the user of the mobile device 50 depresses the outside line call button 54b to make the telephone call start operation, the outside line telephone call is enabled to the telephone set of the other party.

Also, when the mobile device 50 becomes in a talking enabled state due to a call incoming from the outside, the mobile device 50 displays the communication status with the main device 10 on the display panel 53, as described above.

Thereafter, when the user of the mobile device 50 depresses the off button 54c of the mobile device 50 to make the telephone call termination operation, the mobile device 50 sends a telephone call termination command to the main device 10, and stops the display of the graphic on the display panel 53.

The main device 10 receiving the telephone call termination command terminates the outside line telephone call to the telephone set of the other party.

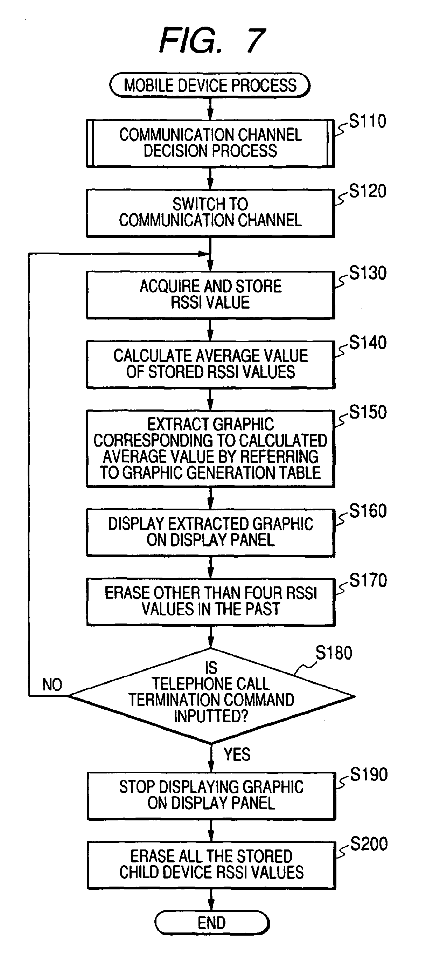

Referring to a flowchart of Fig. 7, a process that is performed in the control part 60 when there is an incoming call or a telephone call start operation is performed at the mobile device 50 will be described below.

When the control part 60 starts the process of Fig. 7, a communication channel decision process for deciding the communication channel for radio communication with the main device 10 is firstly performed at S110. In this communication channel decision process, a graphic corresponding to the secondly lowest level (graphic indicating the state where the communication status with the main device 10 is worst) is extracted from the graphic generation table and displayed on the display panel 53.

At S120, the radio channel thereafter used is switched from the currently used control channel to the communication channel decided at S110.

At S130, the RSSI value of the currently used communication channel is acquired from the RF module 68, and the acquired RSSI value is stored in the EEPROM 70 for example.

At S140, the RSSI value stored in the EEPROM 70 is read, and the average value of read RSSI values is calculated.

At S150, the graphic corresponding to the average value calculated at S140 is extracted by referring to the graphic generation table stored in the ROM.

At S160, the graphic extracted at S150 is outputted to the display panel 53, and displayed on the display panel 53.

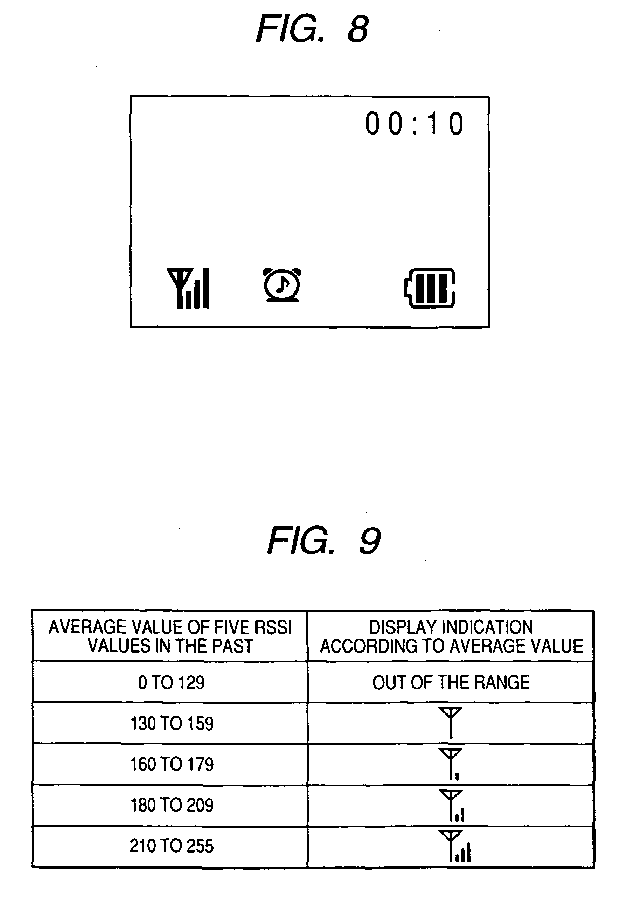

Herein, if the average value calculated at S140 is 200, the graphic corresponding to the highest level (180 to 255) in Fig. 4 is displayed in a left lower region on the display panel 53, as shown in Fig. 8. On the display panel 53, the current time and the operation state of the mobile device 50 are displayed, besides the communication status with the main device 10 displayed at S160.

At S170, four values other than RSSI values in the past are erased.

At S180, it is determined whether or not the telephone call termination command is inputted.

When it is determined at S180 that the telephone call termination command is inputted, the procedure goes to S190, or when it is determined at S180 that the telephone call termination command is not inputted, the procedure goes to S130.

At S190, the output of graphic to the display panel 53 is stopped. Subsequently, at S200, all the RSSI values stored in the EEPROM 70 are erased, and this procedure is ended.

When the number of RSSI values stored in the EEPROM 70 is less than or equal to four, the average value of RSSI values only stored in the EEPROM 70 is calculated at S140.

As described above, the mobile device 50 of the first aspect periodically detects the signal strength of radio signal sent via the communication channel, when the user talks employing the mobile device 50 (the mobile device 50 makes the radio communication with the main device 10 via the communication channel), and sequentially acquires the detected signal strength. The mobile device 50 then generates a typical graphic, based on the average value of five signal strengths (RSSI values) acquired in the past, and displays the graphic as the communication status with the main device 10 on the display panel 53.

With the above cordless telephone set 1, when the user talks employing the mobile device 50, the user can know the communication status similar to that of the talking condition, because the communication status is not rapidly changed, even if the user moves the mobile device 50 from the ear to confirm the communication status displayed on the display panel 53.

Also, the mobile device 50 displays an indication that the communication status with the main device 10 is worst on the display panel 53 since there is a calling command or an incoming call till the radio communication with the main device 10 is made employing the communication channel, whereby the user can judge that the communicable state is established.

Also, with the cordless telephone set 1 of the first aspect, since the current signal strength is obtained based on the average value of five RSSI values in the past, the current signal strength can be simply obtained without being affected by disturbance and derived.

Also, with the cordless telephone set 1, since the average value of five RSSI values in the past are compared with plural thresholds in the graphic generation table, and the graphic corresponding to its average value is displayed on the display panel 53, the user only takes a glance at the display panel 53 to confirm the communication status with the main device 10.

In this aspect, the RF module 68 functions a as communication unit and a signal strength detection unit, and the flowchart of Fig. 7 functions as a communication control unit. In Fig. 6, the specified communication channel command sent from the main device 10 functions as the call signal, the control channel functions as the control radio channel, and the communication channel functions as the communication radio channel. Also, the display panel 53 functions as a display unit, the processing at S130 and S140 functions as a signal strength estimation unit, and the processing at S110, S150 and S160 functions as a display control unit.

### [Second aspect]

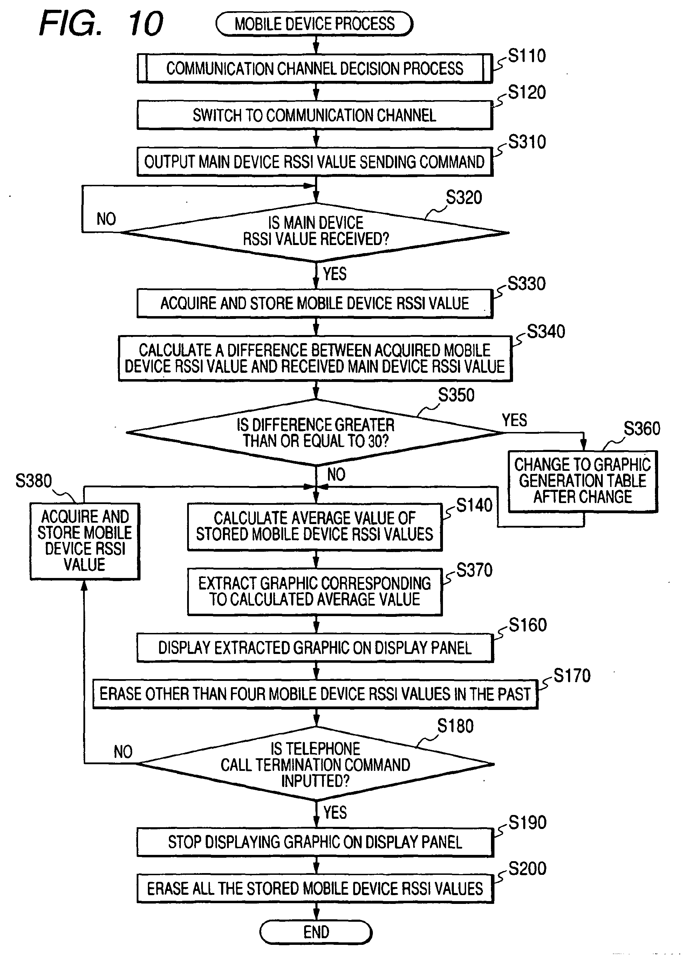

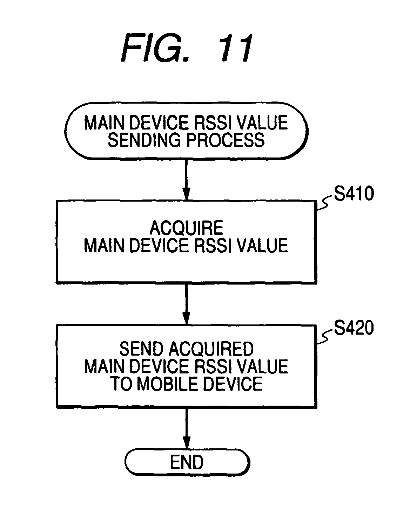

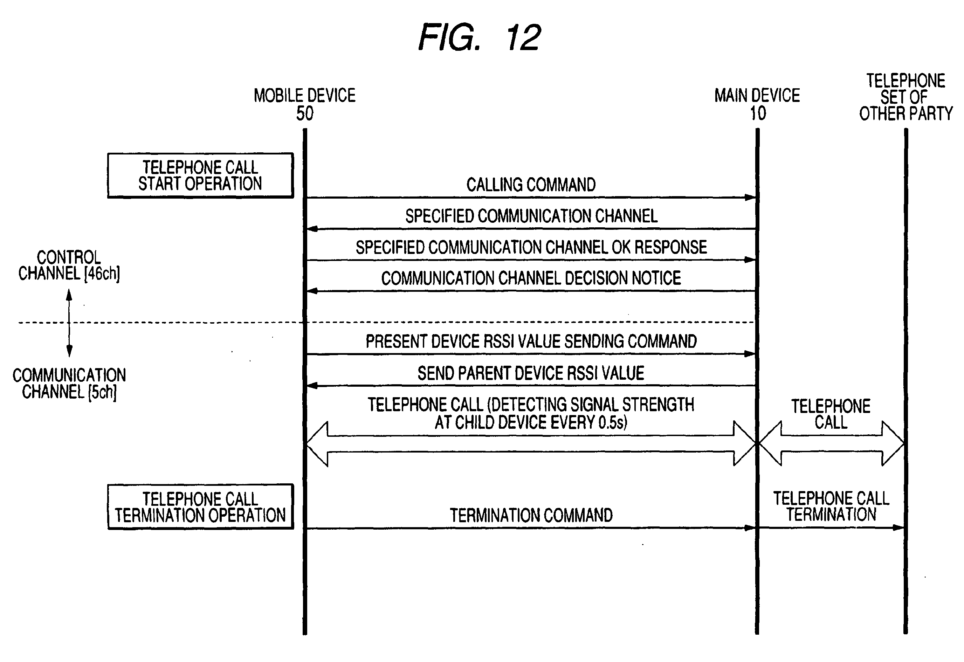

Referring to Figs. 9 to 12, a cordless telephone set 2 according to a second aspect of the invention will be described below. In the cordless telephone set 2 of the second aspect, in contrast to the cordless telephone set 1 of the first aspect, the main device 10 detects the signal strength of radio signal from the mobile device 50, and sends its detection result to the mobile device 50, while the mobile device 50 updates the graphic generation table, based on the detection result received from the main device 10, and displays the communication status with the main device 10 on the display panel 53. In Figs. 9 to 12, Fig. 9 is an explanatory view for explaining the graphic generation table after change, Fig. 10 is a flowchart showing a process that is performed in the control part 60 when there is an incoming call or the telephone call start operation is performed at the mobile device 50 of the second aspect, Fig. 11 is a flowchart showing a process that is performed in the radio communication control part 32 of the main device 10 according to the second aspect, and Fig. 12 is a sequence chart showing the operation that is performed between the main device 10 and the mobile device 50 when the user makes a call from the mobile device 50 according to the second aspect.

The mobile device 50 according to the second aspect is different in the following two points from the mobile device 50 according to the first aspect.

First of all, in addition to the graphic generation table of Fig. 4, the graphic generation table after change as shown in Fig. 9 is stored in the ROM of the control part 60. More specifically, the threshold for each level in the graphic generation table after change is set higher than the threshold for each level in the graphic generation table corresponding to it, as shown in Fig. 9.

The control part 60 performs a process of Fig. 10, instead of the process of Fig. 7. The process of Fig. 10, like the process of Fig. 7, is performed in the control part 60, when there is an incoming call, or the telephone call start operation is performed. In the process of Fig. 10, the same steps are given the same step numbers as in the process of Fig. 7, and not described in detail.

That is, the control part 60 performs the process of Fig. 9, and ends the steps S110 and S120, and the procedure goes to S310.

At S310, a command for sending the signal strength detected by the main device 10 in receiving the radio signal from the mobile device 50 from the main device 10 to the mobile device 50 (hereinafter referred to as a main device RSSI value sending command) is outputted to a compander 66. In the following explanation, to distinguish the signal strengths (RSSI values) acquired by the main device 10 and the mobile device 50, the signal strength (8-bit digit value) acquired by the main device 10 is called a main device RSSI value and the RSSI value acquired by the mobile device 50 is called a mobile device RSSI value.

When step S310 is performed, the mobile device 50 sends a main device RSSI sending command via the communication channel from the RF module 68.

Subsequently, at S320, the procedure waits till the main device RSSI value is received from the main device 10, and when the main device RSSI value is' received, the received main device RSSI value is stored in the RAM for example.

Subsequently, at S330, the mobile device RSSI value in receiving the main device RSSI value is acquired, and stored in the EEPROM 70.

At S340, a difference between the mobile device RSSI value stored in the EEPROM 70 at S330 and the main device RSSI value stored in RAM at S320 is calculated.

At S350, it is determined whether or not the difference calculated at S340 is greater than or equal to a predetermined threshold (30 in the second aspect). In the second aspect, the threshold used for this determination is set to 30, but may be appropriately set to other value.

At S350, when it is' determined that the difference is greater than or equal to 30, the procedure goes to S360, where the table to be referenced at S370 is changed from the graphic generation table to the graphic generation table after change, and the procedure goes to S140.

On the other hand, at S350, when it is determined that the difference is not greater than or equal to 30, the procedure directly goes to S140.

When step S140 is ended, the graphic corresponding to the average value calculated at S140 is extracted by referring to the graphic generation table at S370.

More specifically, at S370, the graphic corresponding to the average value calculated at S140 is extracted by referring to the graphic generation table after change, when step S360 is performed in the process of Fig. 10 this time, or conversely, the graphic corresponding to the average value calculated at S140 is extracted by referring to the graphic generation table, when step S360 is not performed in the process of Fig. 10 this time.

When step S370 is ended, the procedure goes from S160 to S170 to S180. If it is determined that the telephone call termination command is not inputted at S180, the procedure goes to S380.

At S380, the mobile device RSSI value is acquired, and stored in the EEPROM 70, and the procedure goes to S140.

Also, at S180, when it is determined that the telephone call termination command is inputted, the procedure goes from S190 to S200 as in the first aspect, and is ended.

Then, the main device 10 according to the second aspect is different from the main device 10 according to the first aspect in the point that the radio communication control part 32 performs a main device RSSI value sending process of Fig. 11.

That is, when the main device 10 receives a main device sending command from the mobile device 50, a main device RSSI value sending process is performed in the radio communication control part 32.

When the main device RSSI value sending process is performed, first of all, the signal strength of radio signal sent via the communication channel for use with the mobile device 50 is acquired via the RF module 38 at S410.

Subsequently, at S420, the main device RSSI value is sent by radio to the RF module 38 by outputting the acquired signal strength (i.e., main device RSSI value) to the compander36, and the main device RSSI value sending process is ended.

Referring to Fig. 12, the operation that is performed between the main device 10 and the mobile device 50 when the user makes a call from the mobile device 50 according to the second aspect will be described below.

In the cordless telephone set 2, when the telephone call start operation is performed by the user depressing the outside line call button 54b in the standby state, the mobile device 50 becomes in a communicable state by switching the control channel (e.g., 46 channel) into the communication channel (e.g., 5 channel) in accordance with the same procedure as in Fig. 5.

Herein, when the mobile device 50 becomes in the communicable state, it sends a main device RSSI value sending command to the main device 10, employing the communication channel (5 channel).

The main device 10 receiving the main device RSSI value sending command acquires the signal strength of radio signal sent on the 5 channel from the mobile device 50, and sends the acquired signal strength (main device RSSI value) to the mobile device 50 via the 5 channel.

The mobile device 50 receiving the main device RSSI vale acquired the signal strength of radio signal sent on the 5 channel from the main device 10, and compares the acquired mobile device RSSI value with the main device RSSI value.

The mobile device 50 displays the graphic by referring to the graphic generation table after change when a difference between the mobile device RSSI value and the main device RSSI value is greater than or equal to 30, or conversely, displays the graphic by referring to the graphic generation table, when the difference between the mobile device RSSI value and the main device RSSI value is not greater than or equal to 30.

Thereafter, when the user of the mobile device 50 depresses the off button 54c of the mobile device 50 to perform the telephone call termination operation, the mobile device 50 sends a telephone call termination command to the main device 10, and stops the display of the graphic.

The main device 10 receiving the telephone call termination command terminates the outside line telephone call to the telephone set of the other party.

On the other hand, when the cordless telephone set 2 has an call incoming from the outside, the mobile device 50 becomes in a communicable state by switching the control channel (e.g., 46 channel) into the communication channel (e.g., 5 channel) in accordance with the same procedure as in Fig. 5.

In the following, the same procedure of Fig. 12 is taken.

With the cordless telephone set 2 according to the second aspect as described above, the mobile device 50 displays the communication status, including the communication status from the mobile device 50 to the main device 10 on the display panel 53, whereby the user is informed of more correct communication status.

In the second aspect, the flowchart of Fig. 10 functions as a communication control unit, steps S310 to S360 function as a threshold change unit, and the main device RSSI value sending process functions as a measured result sending unit.

Though the aspects of the invention have been described above, various modifications may be made thereto.

Though the cordless telephone sets 1 and 2 of the first and second aspects include a facsimile function, they may include any other function, as far as it has the function of the telephone set, to achieve the same effect of the above aspects.

Also, though in this aspect, the average value of five mobile device RSSI values in the past is calculated at S140, the average value of plural mobile device RSSI values in the past, or the deviation of plural mobile device RSSI values in the past may be calculated.

Also in the above aspect, the graphic displayed on the display panel 53 at step S110 is the graphic indicating the state where the communication status with the main device 10 is worst, but may be the graphic (lowest graphic in Fig. 4 or Fig. 9) indicating the state where the communication status with the main device 10 is most excellent.

Also, in this aspect, the graphic extracted from the graphic generation table is displayed on the display panel 53 at S160, but the average value calculated at S140 may be directly displayed at S160. In this case, step S150 may not be performed.

Also, the step S110 may be configured to perform the processing from S130 to S170.

Also, in the second aspect, after step S120 is ended, the main device RSSI value sending command is sent once, but it may be sent at a predetermined interval.

## Claims

1. An additional device for a cordless telephone set, comprising:
a communication unit that makes radio communication with a main device;
a communication control unit that is adapted to decide a radio channel for communication available to transmit and receive a signal to or from the main device, when a calling command is inputted or a call signal transmitted by radio from the main device is received by the communication unit, and is adapted then to transmit or receive the signal by enabling the communication unit to make the radio communication with the main device, employing the decided radio channel for communication;
a display unit that is adapted to display information;
a signal strength detection unit that is adapted to periodically detect a signal strength of a radio signal received from the main device by the communication unit, when the communication unit makes the radio communication with the main device under a control of the communication control unit;
**characterised by**
a signal strength estimation unit that is adapted to estimate a current signal strength , based on a plurality of signal strengths acquired before, by sequentially acquiring the signal strength detected by the signal strength detection unit; and
a display control unit that is adapted to display a communication status with the main device on the display unit, based on the signal strength estimated by the signal strength estimation unit.

2. The additional device for a cordless telephone set according to claim 1, wherein the communication control unit decides the radio channel for communication by making the radio communication with the main device , employing a predetermined radio channel for control, when the calling command is inputted, or the call signal is received by the communication unit, and the display control unit controls the display unit to display an indication that the communication status with the main device is worst since the calling command is inputted or the call signal is received by the communication unit till the communication unit makes the radio communication with the main device via the radio channel for communication.

3. The additional device for a cordless telephone set according to claim 1 or 2, wherein the signal strength estimation unit estimates the current signal strength by calculating an average value of the plurality of signal strengths acquired from the signal strength detection unit.

4. The additional device for a cordless telephone set according to claim 1, 1, 2 or 3, wherein the display control unit compares
the signal strength estimated by the signal strength estimation unit with a plurality of preset thresholds to digitize thy signal strength, and displays graphically a digitized result on the display unit.

5. The additional device for a cordless telephone set according to claim 4, wherein the main device measures a signal strength of a radio signal transmitted from the additional device, and transmits its measured result to the additional device; and
the additional device further comprises a threshold change unit that changes the threshold in accordance with the measured result transmitted from the main device.

6. A cordless telephone set, comprising:
an additional device according to any preceding claim, and
the main device for connecting the additional device to a telephone line network.

7. A cordless telephone set, comprising:
an additional device according to any one of claims 1 to 5; and
a main device for connecting the additional device to a telephone line network, the main device comprising a measured result transmission unit that measures a signal strength of a radio signal transmitted from the additional device and transmits a measured result to the additional device;
wherein the additional device further comprises a threshold change unit that changes the threshold in accordance with the measured result transmitted from the main device.

## Patentansprüche

1. Zusatzvorrichtung für ein schnurloses Telefon, mit: einer Kommunikationseinheit, die eine Radiokommunikation mit einer Hauptvorrichtung herstellt;
einer Kommunikationssteuereinheit, die angepasst ist zum Entscheiden eines Radiokanals für Kommunikation, der zum Senden und Empfangen eines Signals an die oder von der Hauptvorrichtung verfügbar ist, wenn ein Rufbefehl eingegeben wird oder wenn ein Rufsignal, das über Radio von der Hauptvorrichtung gesendet ist, von der Kommunikationseinheit empfangen wird, und die angepasst ist zum Senden oder Empfangen des Signals durch Ermöglichen der Kommunikationseinheit, die Radiokommunikation mit der Hauptvorrichtung herzustellen, indem der entschiedene Radiokanal für Kommunikation verwendet wird;
einer Anzeigeneinheit, die angepasst ist zum Anzeigen von Information;
einer Erfassungseinheit einer Signalstärke, die angepasst ist zum periodischen Erfassen einer Signalstärke eines Radiosignals, das von der Hauptvorrichtung durch die Kommunikationseinheit empfangen wird, wenn die Kommunikationseinheit die Radiokommunikation mit der Hauptvorrichtung unter einer Steuerung der Kommunikationssteuereinheit herstellt;
**gekennzeichnet durch**:
eine Schätzeinheit einer Signalstärke, die angepasst ist zum Schätzen einer gegenwärtigen Signalstärke auf der Grundlage einer Mehrzahl von zuvor gewonnenen Signalstärken, **durch** sequentielles Gewinnen der Signalstärke, die **durch** die Erfassungseinheit der Signalstärke erfaßt ist; und
eine Anzeigensteuereinheit, die angepasst ist zum Anzeigen eines Kommunikationsstatus mit der Hauptvorrichtung auf der Anzeigeneinheit auf der Grundlage der Signalstärke, die durch die Schätzeinheit der Signalstärke geschätzt ist.

2. Zusatzvorrichtung für ein schnurloses Telefon nach Anspruch 1, bei der die Kommunikationssteuereinheit den Radiokanal für Kommunikation entscheidet durch Herstellen der Radiokommunikation mit der Hauptvorrichtung, indem ein vorbestimmter Radiokanal für Steuerung verwendet wird, wenn der Rufbefehl eingegeben wird oder das Rufsignal von der Kommunikationseinheit empfangen wird, und die Anzeigensteuereinheit die Anzeigeneinheit zum Anzeigen einer Bezeichnung steuert, dass der Kommunikationsstatus mit der Hauptvorrichtung am schlechtesten ist, seit der Rufbefehl eingegeben ist oder das Rufsignal von der Kommunikationseinheit empfangen ist, bis die Kommunikationseinheit die Radiokommunikation mit der Hauptvorrichtung über den Radiokanal für Kommunikation herstellt.

3. Zusatzvorrichtung für ein schnurloses Telefon nach Anspruch 1 oder 2, bei der die Schätzeinheit der Signalstärke die gegenwärtige Signalstärke schätzt durch Berechnen eines Mittelwerts der Mehrzahl von Signalstärken, die von der Erfassungseinheit der Signalstärke gewonnen sind.

4. Zusatzvorrichtung für ein schnurloses Telefon nach Anspruch 1, 2 oder 3, bei der die Anzeigensteuereinheit die Signalstärke, die von der Schätzeinheit der Signalstärke geschätzt ist, mit einer Mehrzahl von voreingestellten Schwellenwerten vergleicht zum Digitalisieren der Signalstärke, und grafisch ein digitalisiertes Resultat auf der Anzeigeneinheit anzeigt.

5. Zusatzvorrichtung für ein schnurloses Telefon nach Anspruch 4, bei der die Hauptvorrichtung eine Signalstärke eines Radiosignals misst, das von der Zusatzvorrichtung gesendet ist, und seinen gemessenen Wert zu der Zusatzvorrichtung sendet; und
die Zusatzvorrichtung weiter eine Schwellenwertänderungseinheit aufweist, die den Schwellenwert gemäß dem gemessenen Resultat ändert, das von der Hauptvorrichtung gesendet ist.

6. Schnurloses Telefon mit:
einer Zusatzvorrichtung nach einem der vorhergehenden Ansprüche und
der Hauptvorrichtung zum Verbinden der Zusatzvorrichtung mit einem Telefonleitungsnetz.

7. Schnurloses Telefon mit:
einer Zusatzvorrichtung nach einem der Ansprüche 1 bis 5 und
einer Hauptvorrichtung zum Verbinden der Zusatzvorrichtung mit einem Telefonleitungsnetz, wobei die Hauptvorrichtung eine Sendeeinheit eines gemessenen Resultats aufweist, die eine Signalstärke eines Radiosignals misst, das von der Zusatzvorrichtung gesendet ist, und ein gemessenes Resultat zu der Zusatzvorrichtung sendet;
worin die Zusatzvorrichtung weiter eine Schwellenwertänderungseinheit aufweist, die den Schwellenwert gemäß dem gemessenen Resultat ändert, das von der Hauptvorrichtung gesendet ist.

## Revendications

1. Dispositif supplémentaire pour un téléphone sans fil comprenant :
une unité de communication qui réalise une communication radio avec un dispositif principal ;
une unité de commande de communication qui est adaptée pour décider d'un canal radio pour une communication disponible pour émettre et recevoir un signal vers ou à partir du dispositif principal, lorsqu'une commande d'appelant est entrée ou lorsqu'un signal d'appel émis par radio par le dispositif principal est reçu par l'unité de communication, et est adaptée ensuite pour émettre ou recevoir le signal en permettant à l'unité de communication d'effectuer la communication radio avec le dispositif principal, en utilisant le canal radio déterminé pour une communication ;
une unité d'affichage qui est adaptée pour afficher des informations ;
une unité de détection d'intensité de signal qui est adaptée pour détecter périodiquement une intensité de signal d'un signal radio reçu du dispositif principal par l'unité de communication, lorsque l'unité de communication effectue la communication radio avec le dispositif principal sous le contrôle de l'unité de commande de communication ;
**caractérisé par** une unité d'estimation d'intensité de signal qui est adaptée pour estimer une intensité de signal actuelle, sur la base d'une pluralité d'intensités de signaux acquises précédemment, en acquérant séquentiellement l'intensité de signal détectée par l'unité de détection d'intensité de signal ; et
une unité de commande d'affichage qui est adaptée pour afficher un état de communication avec le dispositif principal sur l'unité d'affichage, sur la base de l'intensité de signal estimée par l'unité d'estimation d'intensité de signal.

2. Dispositif supplémentaire pour un téléphone sans fil selon la revendication 1, dans lequel l'unité de commande de communication décide du canal radio pour une communication en effectuant la communication radio avec le dispositif principal, en utilisant un canal radio prédéterminé pour la commande, lorsque la commande d'appelant est entrée, ou que le signal d'appel est reçu par l'unité de communication, et l'unité de commande d'affichage commande l'unité d'affichage pour afficher une indication que l'état de communication avec le dispositif principal est le plus mauvais depuis que la commande d'appelant a été entrée ou que le signal d'appel a été reçu par l'unité de communication jusqu'à ce que l'unité de communication effectue la communication radio avec le dispositif principal par l'intermédiaire du canal radio pour une communication.

3. Dispositif supplémentaire pour un téléphone sans fil selon la revendication 1 ou 2, dans lequel l'unité d'estimation d'intensité de signal estime l'intensité de signal actuelle en calculant une valeur moyenne de la pluralité d'intensités de signaux acquises par l'unité de détection d'intensité de signal.

4. Dispositif supplémentaire pour un téléphone sans fil selon la revendication 1, 2 ou 3, dans lequel l'unité de commande d'affichage compare l'intensité de signal estimée par l'unité d'estimation d'intensité de signal avec une pluralité de seuils prédéterminés pour numériser l'intensité de signal, et affiche graphiquement un résultat numérisé sur l'unité d'affichage.

5. Dispositif supplémentaire pour un téléphone sans fil selon la revendication 4, dans lequel le dispositif principal mesure une intensité de signal d'un signal radio émis par le dispositif supplémentaire, et transmet son résultat mesuré au dispositif supplémentaire ; et
le dispositif supplémentaire comprend en outre une unité de modification de seuil qui modifie le seuil en fonction du résultat mesuré transmis par le dispositif principal.

6. Téléphone sans fil, comprenant :
un dispositif supplémentaire selon l'une quelconque des revendications précédentes, et
le dispositif principal pour connecter le dispositif supplémentaire à un réseau de lignes téléphoniques.

7. Téléphone sans fil, comprenant :
un dispositif supplémentaire selon l'une quelconque des revendications 1 à 5 ; et
un dispositif principal pour connecter le dispositif supplémentaire à un réseau de lignes téléphoniques, le dispositif principal comprenant une unité de transmission de résultat mesuré qui mesure une intensité de signal d'un signal radio émis par le dispositif supplémentaire et qui transmet un résultat mesuré au dispositif supplémentaire ;
dans lequel le dispositif supplémentaire comprend en outre une unité de modification de seuil qui modifie le seuil en fonction du résultat mesuré transmis par le dispositif principal.
